Europäisches Patentamt

European Patent Office

Office européen des brevets

(11) Veröffentlichungsnummer: **0 078 395**
**B1**

# EUROPÄISCHE PATENTSCHRIFT

(45) Veröffentlichungstag der Patentschrift:
30.04.86

(21) Anmeldenummer: 82108732.7

(22) Anmeldetag: 21.09.82

(51) Int. Cl.⁴: **F 16 B 5/06**

(54) Verbindung von Platten mit Trägern.

(30) Priorität: 02.11.81 DE 3143415

(43) Veröffentlichungstag der Anmeldung:
11.05.83 Patentblatt 83/19

(45) Bekanntmachung des Hinweises auf die Patenterteilung:
30.04.86 Patentblatt 86/18

(84) Benannte Vertragsstaaten:
AT CH FR IT LI

(56) Entgegenhaltungen:
DE - A - 1 559 428
DE - A - 2 606 645
FR - A - 2 421 267

(73) Patentinhaber: HILTI Aktiengesellschaft,
FL-9494 Schaan (LI)

(72) Erfinder: Uhlig, Raimer, Bauweberstrasse 1,
D-8000 München 71 (DE)

(74) Vertreter: Wildi, Roland, Hilti Aktiengesellschaft
Patentabteilung, FL-9490 Schaan (LI)

## Beschreibung

Die Erfindung betrifft eine Verbindung von Platten mit als Hohlprofile ausgebildeten Trägern, wobei ein Befestigungselement vorgesehen ist, das aus einem sich an den Platten abstützenden Kopf und einem mindestens teilweise hohlen Schaft besteht, der in der einführseitigen Endzone mit sich am Trägerinneren abstützenden sägezahnförmigen Rastnasen versehen ist und der im Bereich der Rastnasen zur Bildung von federnden Stegen mit einem Längsschlitz versehen ist (Siehe DE-A-2.606.645, Figur 3).

Der Träger für die Platten ist als offenes Hohlprofil ausgebildet und weist innenseitig Schultern auf, die dem Hintergreifen schaftseitiger sägezahnförmiger Rastnasen dienen. Die Rastnasen überragen hierzu die Mantelkontur des Schaftes. Um ein Einführen des Schaftes in das Hohlprofil, dessen Einführöffnung auf die Dicke des Schaftes abgestimmt ist, zu ermöglichen, ist der Schaft von dessen einführrichtungsseitigen Ende her im Bereich der Rastnasen längsgeschlitzt. In der längsgeschlitzten Zone läßt sich der Schaft somit zusammenfedern, so daß auch die überstehenden sägezahnförmigen Rastnasen die Einführöffnung passieren können. Erreichen die schaftseitigen Rastnasen die Hohlkammer des Hohlprofils, so federt der Schaft wieder selbsttätig auf und es kommt zu der vorerwähnten Verrastung.

Ein erheblicher Nachteil dieses Befestigungselementes besteht darin, daß dessen Haltesicherheit durch die Auffederungskraft des Schaftes bestimmt ist. Beispielsweise Quer- oder Wechselbelastungen des Elementes können zur Überwindung der Auffederungskraft und damit zum Lösen der Befestigung führen.

Der Erfindung liegt die Aufgabe zugrunde, ein Befestigungselement zum Verbinden von Platten an Trägern zu schaffen, das sich durch hohe Haltesicherheit auszeichnet.

Erfindungsgemäß wird die Aufgabe dadurch gelöst, daß bei der Verbindung weiter ein Sperriegel vorgesehen ist zum Eingriff in den Längsschlitz, so daß der Sperriegel nach seinem Eingriff die Einfederung der Stege im Bereich der Rastnasen verhindert.

Nach dem voran geschilderten Einführen und Verrasten des Befestigungselementes wird in den sich in verrastetem Zustand offenen Längsschlitz der Sperriegel eingeführt. Dadurch ist ein nachfolgendes Zusammenfedern des Schaftes und damit ein Aufheben des Rasteingriffes mit Sicherheit unterbunden. Die Befestigung der Platte gegenüber dem Träger ist damit zuverlässig gesichert und kann nur durch vorheriges Entfernen des Sperriegels ohne Zerstörung von Teilen wieder gelöst werden.

Der Sperriegel kann unterschiedlichste Formen aufweisen. Beispielsweise ist dieser als Stift mit rundem oder quadratischem Querschnitt gestaltet. Mit Vorteil ist der Sperriegel als Flachprofil mit im wesentlichen der lichten Weite des Längsschlitzes entsprechender Dicke ausgebildet. Ein solcher Sperriegel schafft eine Sperre mit grossflächigem Angriff im Bereich des Längsschlitzes und zeichnet sich zudem durch guten Halt aus.

Um den Halt des Sperriegels im Längsschlitz noch zu verbessern, kann die Dicke des Sperriegels auch geringfügig grösser als die lichte Weite des Längsschlitzes sein, so dass ein Klemmsitz erzielt wird. Zur Erhöhung der Haltesicherheit des Sperriegels weist dieser vorzugsweise an seinen mit den Stegen des Schaftes in Verbindung tretenden Seiten eine Profilierung, wie beispielsweise eine Querriffelung, auf.

Das Einführen des Sperriegels in den Längsschlitz wird mit Vorteil dadurch erleichtert, dass der Sperriegel eine keilförmige Einführseite aufweist. Alternativ ist es möglich, die Einführbarkeit durch konische Gestaltung des Längsschlitzes zu begünstigen.

Nach einem weiteren Vorschlag der Erfindung ist der Sperriegel am Schaft des Befestigungselementes schwenkbar angelenkt. Dies bietet vor allem den Vorteil, dass der Sperriegel einteilig mit dem Befestigungselement verbunden ist und damit das Verriegeln handhabungsmässig wesentlich vereinfacht wird. Zudem bietet eine zusammengefügte Einheit aus Sperriegel und Befestigungselement den Vorteil, dass keine Einzelteile verlorengehen und die Lagerhaltung problemlos ist.

In Weiterbildung der Erfindung weist der Sperriegel einen Betätigungsgriff auf. Der Betätigungsgriff erleichtert das Einführen des Sperriegels in den Längsschlitz, ohne dass hierzu Werkzeuge benötigt werden. Ebenso erlaubt der Betätigungsgriff ein allenfalls erforderliches Wiederausrücken des Sperriegels.

Die Vorteile der Erfindung sind zusammen mit unterschiedlich ausgebildeten Befestigungselementen gegeben, sei es dass der Längsschlitz über die gesamte Schaftlänge hinweg verlängert ist und an der Stirnseite des Kopfes austritt - der Sperriegel kann diesfalls vom Kopf her in den Längsschlitz eingeschoben werden - oder sei es, dass der Längsschlitz nur im endseitigen, Stütznasen für die Rastnasen tragenden Bereich vorgesehen ist - der Sperriegel kann dann seitlich in den Längsschlitz eingebracht werden.

Die Erfindung wird nunmehr anhand einer Zeichnung, die Ausführungsbeispiele wiedergibt, näher erläutert. Es zeigen:

Fig. 1 Ein erfindungsgemässes Befestigungselement mit Sperriegel im Montageeinsatz, in Schnittdarstellung,

Fig. 1a den Sperriegel gemäss Fig. 1,

Fig. 2 eine weitere Ausführungsform eines erfindungsgemässen Befestigungselementes mit sich nicht in Sperrposition befindlichem Sperriegel, in Schnittdarstellung,

Fig. 3 eine Ansicht des Befestigungselementes mit Sperriegel gemäss Fig. 2, in Pfeilrichtung III der Fig. 2,

Fig. 4 die Ansicht gemäss Fig. 3, mit in Sperrstellung befindlichem Sperriegel.

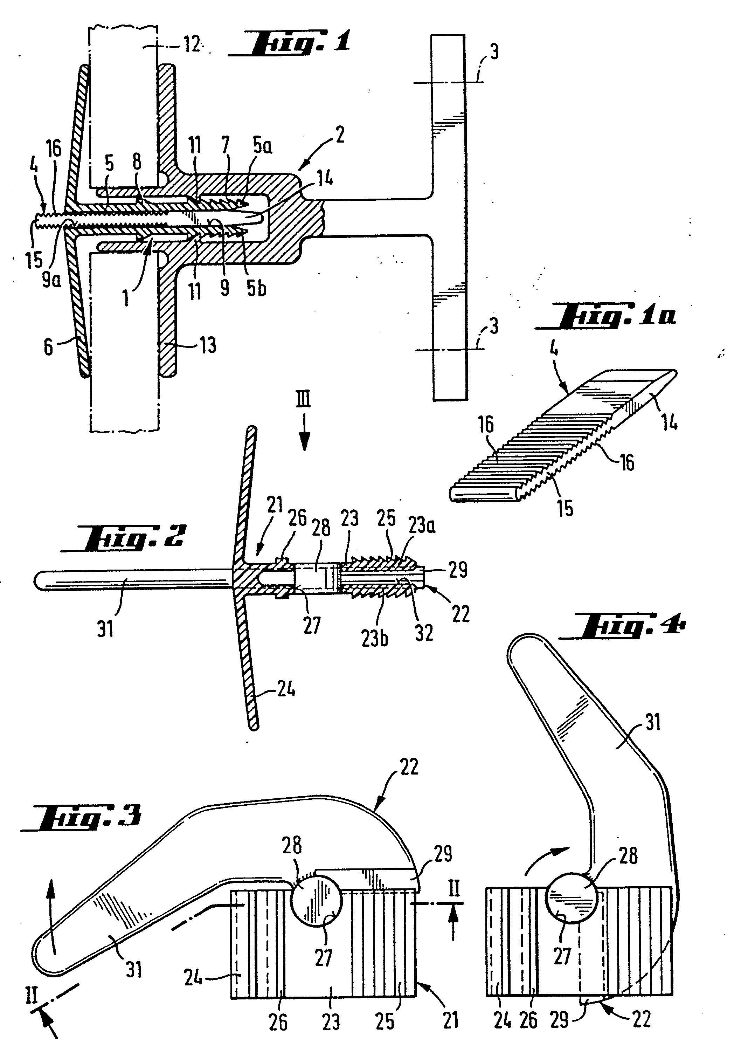

Das in Fig. 1 gezeigte, insgesamt mit 1 bezeichnete Befestigungselement ragt in einen als Hohlprofil ausgebildeten, insgesamt mit 2 bezeichneten Träger ein. Letzterer ist beispielsweise an einem hier nicht gezeigten Bauwerksteil über angedeutete Verbindungselemente 3 verankert. Ein insgesamt mit 4 bezeichneter Sperriegel ist im Befestigungselement 1 unter Verrastung festgelegt.

Das Befestigungselement 1 besteht aus einem Schaft 5 und einem Kopf 6. Der Schaft 5 weist in der einführrichtungsseitigen Endzone radial abstehende sägezahnförmige Rastnasen 7 auf und verfügt ferner, näher dem Kopf 6, über eine Führungsschulter 8. Ein Längsschlitz 9 teilt den Schaft 5 vom einführrichtungsseitigen Ende her in Stege 5a, 5b, setzt sich in Form einer Oeffnung 9a entlang des Schaftes 5 fort und tritt an der Stirnseite des Kopfes 6 aus. Durch diese Oeffnung 9a ist der Sperriegel 4 in den Längsschlitz 9 vorgetrieben. Dadurch wird ein Einfedern der Stege 5a, 5b unterbunden und so der Eingriff zwischen den schaftseitigen Rastnasen und trägerseitigen Stütznasen 11 gesichert. Der Kopf 6 hält in dieser Position, vorzugsweise unter Vorspannung, eine platte 12 gegen einen Stützflansch 13 des Trägers 2.

Wie die Fig. 1a verdeutlicht, ist der Sperriegel 4 als Flachprofil ausgebildet. Die Einführseite 14 ist keilförmig gestaltet, um das Einführen in die Oeffnung 9a bzw in den Längsschlitz 9 zu erleichtern. Der Sperriegel 4 ist über dessen eigentliche Eingriffszone hinaus um einen Betätigungsgriff 15 verlängert und weist ober- und unterseitig Profilierungen 16 auf, die den Halt des Sperriegels im Befestigungselement 1 erhöhen.

Die Fig. 2 zeigt wiederum ein insgesamt mit 21 bezeichnetes Befestigungselement und einen insgesamt mit 22 bezeichneten Sperriegel. Das Befestigungselement setzt sich aus einem Schaft 23 und einem Kopf 24 zusammen. Der Schaft 23 weist wiederum Rastnasen 25 und eine Führungsschulter 26 auf.

Wie der Fig. 3 zu entnehmen ist, trägt der Schaft 23 in einer teilweise offenen Lagerschale 27 eine an den Sperriegel 22 angeformte Lagerachse 28. Letztere ist in die Lagerschale 27 eingeschnappt. Der um das Zentrum dieser Lagerstelle schwenkbare Sperriegel 22 weist eine keilförmig ausgebildete Einführseite 29 auf. An den Sperriegel 22 ist ein Betätigungsgriff 31 angeformt, über den sich der Sperriegel 22 aus der in Fig. 3 gezeigten Stellung in die in Fig. 4 gezeigte Sperrposition schwenken lässt, wie dies der Drehpfeil verdeutlicht. In dieser Stellung ragt der Sperriegel 22 wiedum in einen den Schaft 23 in Stege 23a, 23b teilenden Längsschliz 32 ein, wodurch, wie bereits zu Fig. 1 erläutet, der Rasteingriff gegenüber einem Träger gesichert wird.

**Patentansprüche**

1. Verbindung von Platten (12) mit als Hohlprofile ausgebildeten Trägern (2), wobei ein Befestigungselement (1; 21) vorgesehen ist, das aus einem sich an den Platten (12) abstützenden Kopf (6) und einem mindestens teilweise hohlen Schaft (5) besteht, der in der einführseitigen Endzone mit sich am Trägerinneren abstützenden sägezahnförmigen Rastnasen (7; 25) versehen ist und der im Bereich der Rastnasen zur Bildung von federnden Stegen (5a, 5b; 23a, 23b) mit einem Längsschlitz (9; 32) versehen ist,
   dadurch gekennzeichnet, daß
   bei der Verbindung weiter ein Sperriegel (4; 22) vorgesehen ist zum Eingriff in den Längsschlitz (9; 32), so daß der Sperriegel (4; 22) nach seinem Eingriff die Einfederung der Stege (5a, 5b; 23a, 23b) im Bereich der Rastnasen (7; 25) verhindert.

2. Verbindung nach Anspruch 1, dadurch gekennzeichnet, dass der Sperriegel (4, 22) als Flachprofil mit im wesentlichen der lichten Weite des Längsschlitzes (9, 32) entsprechender Dicke ausgebildet ist.

3. Verbindung nach Anspruch 1 oder 2, dadurch gekennzeichnet, dass der Sperriegel (4) an seinen mit den Stegen (5a, 5b) in Verbindung tretenden Seiten eine Profilierung (16) aufweist.

4. Verbindung nach einem der Ansprüche 1 bis 3, dadurch gekennzeichnet, dass der Sperriegel (4, 22) eine keilförmige Einführseite (14, 29) aufweist.

5. Verbindung nach einem der Ansprüche 1 bis 4, dadurch gekennzeichnet, dass der Sperriegel (22) am Schaft (23) schwenkbar angelenkt ist.

6. Verbindung nach einem der Ansprüche 1 bis 5, dadurch gekennzeichnet, dass der Sperriegel (4, 22) einen Betätigungsgriff (15, 31) aufweist.

**Claims**

1. A connection of panels (12) with brackets (2) designed as hollew sections, whereby a fastener (1; 21) is provided for, composing a head (6) wich bears on the panels (12) and has a shank (5) wich is at least partly hollow and has sawtooth-shaped detent ribs (7; 25) holding against the inside of the bracket at the section of the insertion end and wich ist provided with a longitudinal slot (9;32) over the section of the detent ribs to form resilient arms (5a, 5b; 23a, 23b), characterized by the connection having, in addition, a keyng bolt (4; 22) to engage in the longitudinal slot (9; 32) so that the keying bolt (4; 22) hnders the inward delection of the arms (5a, 5b; 23a, 23b) over the section of the detent ribs (7; 25) after it has engaged.

2. A connection in accordance with claim 1 characterized by the keying bolt (4, 22) being designed as a flat section having a thickness coresponding basically to the inside width of the longitudinal slot (9, 32).

3. A connection accordng to claims 1 or 2 characterized by the keying bolt (4) having a ridge-like profile (16) on sides connecting with the arms (5a, 5b)

4. A connection in accordance with claims 1 to 3 characterized by the keing bolt (4, 22) having a wedge-shaped insertion side (14, 29).

5. A connection in accordance with claims 1 to 4 characterized by the keying bolt (22) being pivotably linked to the shank (23).

6. A connection in accordance with claims 1 to 5 characterized by the keying bolt (4, 22) having an operating grip (15, 31).

**Revendications**

1. Liaison de plaques (12) sur des poutres (2) constituées sous forme de profilés creux, dans laquelle il est prévu un élément de fixation (1; 21) constitué par une tête (6) s'appuyant sur les plaques (12) et une tige au moins partiellement creuse (5), qui est munie dans sa zone d'extrémite située du côté de l'insertion de crans d'arrét (7; 25) en forme de dents de scie et s'appuyant contre l'intérieur de la poutre et qui est munie dans la région des crans d'arrét d'une fente longitudinale (9; 32) pour constiteur des branches élastiques (5a, 5b; 23a, 23b), <u>caractérisée en</u> ce qu'elle comporte en outre un verrou de blocage (4; 22) destiné à pénêtrer dans la fente longitudinale (9; 32), de manière que le verrou de blocage (4; 22) empéche après son introduction le rapprochement elastique des branches (5a, 5b; 23a, 23b) dans la region des crans d'arrét (7; 25).

2. Liaison selon la revendication 1, caractérisée en ce que le verrou de blocage (4, 22) est constitué sous forme d'un profile plat dont la largeur correspond sensiblement à la largeur interne de la fente longitudinale (9, 32).

3. Liaison selon la revendication 1 ou 2, caractérisée en ce que le verrou de blocage (4) comprend un profilage (16) sur ses côtés qui sont en liaison avec les branches (5a, 5b).

4. Liaison selon l'une des revendications 1 à 3, caractérisée en ce que le verrou de blocage (4, 22) présente un côté d'insertion (14, 29) en forme de coin.

5. Liaison selon l'une des revendications 1 à 4, caractérisée en ce que le verrou de blocage (22) est articulé de façon pivotante à la tige (23).

6. Liaison selon l'une des revendications 1 à 5, caractérisée en ce que le verrou de blocage (4, 22) presente une partie constituant une poignée de manoeuvre (15, 31).

0 078 395

Fig.1
Fig.1a
Fig.2
Fig.3
Fig.4